# EUROPÄISCHE PATENTSCHRIFT

(11) **EP 4 133 252 B1**
(45) Veröffentlichungstag und Bekanntmachung des Hinweises auf die Patenterteilung: **22.10.2025**
(21) Anmeldenummer: 21706543.2
(22) Anmeldetag: 17.02.2021
(51) Int. Cl.: G01N 15/02, G01N 15/06, G01N 1/22

(54) **VERFAHREN UND MESSVORRICHTUNG ZUM BESTIMMEN EINER MESSGROESSE VON PARTIKELN IN EINEM AEROSOL**
METHOD AND MEASUREMENT DEVICE FOR DETERMINING A MEASUREMENT VARIABLE OF PARTICLES IN AN AEROSOL
PROCEDE ET DISPOSITIF DE MESURE POUR DETERMINER UNE VARIABLE DE MESURE DE PARTICULES DANS UN AEROSOL

(30) Priorität: 08.04.2020 DE 102020109885
(43) Veröffentlichungstag der Anmeldung: 15.02.2023
(73) Patentinhaber: Opus Inspection, Inc., East Granby, CT 06026-9720 (US)
(72) Erfinder: GERKENS, Stefan, 79117 Freiburg (DE)
(74) Vertreter: Bauer, Dirk
(86) Internationale Anmeldenummer: PCT/EP2021/053819
(87) Internationale Veröffentlichungsnummer: WO 2021/204446

(56) Entgegenhaltungen:
- US-A- 5 214 386

## Beschreibung

Die Erfindung betrifft zunächst ein Verfahren zum Bestimmen einer Messgröße von Partikeln in einem Aerosol, bei dem in einem ersten Schritt zumindest eine Probe des Aerosols durch eine wechselbare Sonde und weitere Systemkomponenten und in einen Sensor einer Messvorrichtung zugeführt wird. Die Erfindung betrifft weiterhin eine Messvorrichtung mit einem Sensor zur Bestimmung einer Messgröße von Partikeln in einem Aerosol, einer wechselbaren Sonde, weiteren Systemkomponenten und einer Entnahmevorrichtung zur Entnahme einer Probe des Aerosols und zur Zuführung der Probe des Aerosols in einem ersten Schritt durch die Sonde und die Systemkomponenten und in den Sensor.

Derartige Verfahren und Messvorrichtungen sind beispielsweise aus US 5,214,386 A bekannt und können beispielsweise dazu verwendet werden, eine Partikelgrößenverteilung, einen Schwerpunkt einer solchen Partikelgrößenverteilung oder eine Gesamtanzahlkonzentration zu bestimmen.

Es hat sich herausgestellt, dass für derartige Messverfahren die entnommene Aerosolprobe über ein Entnahmesystem der Messvorrichtung zugeführt werden soll. Die Partikel in dem Aerosol können sich in dem Entnahmesystem oder der Messvorrichtung absetzen oder anderweitig abgeschieden werden. Dabei variiert die Abscheiderate in Abhängigkeit der Geometrie des Entnahmesystems und der Messvorrichtung, der Strömungsgeschwindigkeit und der Partikelgröße. Durch unterschiedliche Abscheidemechanismen können Partikel mit unterschiedlichen Größen unterschiedlich stark abgeschieden werden. Dies kann zu Messfehlern führen, die nur schwer vorherbestimmbar sind. Dadurch verringert sich die Messgenauigkeit einer Messvorrichtung.

Die Erfindung beschäftigt sich damit, die Messgenauigkeit des Messverfahrens zu verbessern.

Diese Aufgabe wird erfindungsgemäß durch ein Verfahren mit den Merkmalen des Anspruchs 1 und eine Messvorrichtung mit den Merkmalen des Anspruchs 3 gelöst.

Demnach ist das erfindungsgemäße Verfahren dadurch gekennzeichnet,
- dass in einem zweiten Schritt eine charakteristische Partikelgröße aus einem gemessenen geometrisch-mittleren Partikeldurchmesser des Aerosols ermittelt wird;
- dass in einem dritten Schritt ein charakteristischer Partikelverlust der Sonde und der Systemkomponenten abhängig von der charakteristischen Partikelgröße aus einem Speicherbereich der Sonde ausgelesen wird;
- dass in einem vierten Schritt (S4) ein Messwert der Messgröße erfasst wird; und
- dass in einem fünften Schritt ein Partikelverlust aus dem Messwert der Messgröße und dem charakteristischen Partikelverlust bestimmt und der Messwert der Messgröße mit dem Partikelverlust korrigiert wird.

Dies hat den Vorteil, dass auch die Messfehler korrigiert werden können, die aufgrund der Prozesse auftreten, die bei unterschiedlichen Partikelgrößen unterschiedlich ablaufen. Der daraus abgeleitete Partikelverlust kann somit auf Grundlage der aktuellen Partikelgröße bestimmt werden und kann daher genauer sein als ein auf Annahmen beruhender Partikelverlust. Somit kann auch die Korrektur des Messwertes genauer erfolgen, so dass insgesamt ein genaueres Messergebnis erzielbar ist.

Der ermittelte Partikelverlust ist erfindungsgemäß eine Funktion der Partikelgröße. Alternativ können auch ein oder mehrere konkrete Partikelverlust-Werte für diskrete Partikelgrößen bestimmt werden. Ein Messwert kann demnach mit dem oder einem zum Messwert passenden Partikelverlust korrigiert werden.

Erfindungsgemäß wird eine charakteristische Partikelgröße des Aerosols bestimmt. Diese charakteristische Partikelgröße dient praktisch zur Bestimmung eines Wertes für den Partikelverlust. Auf diese Weise ist nur ein Wert für den Partikelverlust notwendig und nicht mehrere Werte oder eine von der Partikelgröße abhängige Funktion zu bestimmen. Die Korrektur eines Messwertes kann so einfacher und eventuell schneller erfolgen.

Erfindungsgemäß wird die charakteristische Partikelgröße aus der Partikelgrößenverteilung des Aerosols bestimmt. Dadurch ist eine der jeweiligen Anwendungssituation angepasste Korrektur der Messwerte möglich.

Erfindungsgemäß wird die charakteristische Partikelgröße aus dem geometrisch-mittleren Partikeldurchmesser des Aerosols bestimmt.

In einer besonders vorteilhaften Ausführung wird der geometrisch-mittlere Partikeldurchmesser des Aerosols gemessen. Eine solche Messung kann durch ein Partikelmessgerät erfolgen. Dieses Partikelmessgerät kann auch Teil einer Messvorrichtung sein, so dass die Ermittlung der Partikelgröße im laufenden Betrieb oder zumindest in der Gebrauchssituation erfolgen kann.

In einer Ausführung wird der Partikelverlust aufgrund der Systemgeometrie berechnet. Dies kann zweckmäßigerweise unter Berücksichtigung literaturbekannter größenabhängiger Abscheidemechanismen für Partikel erfolgen. Es können aber auch alternativ und/oder zusätzlich andere Systemparameter berücksichtigt werden.

Die charakteristische Partikelgröße kann beispielsweise vorgegeben oder bekannt sein, beispielsweise wenn das zu messende Aerosol eine vorbekannte charakteristische Partikelgröße besitzt.

In einer vorteilhaften Ausführung wird der Partikelverlust empirisch bestimmt. Dazu kann beispielsweise eine Partikelkonzentration an einem Aerosoleingang und an einem Aerosolausgang der Messvorrichtung gemessen werden. Der Partikelverlust kann jedoch auch auf andere Weise gemessen werden. Auf diese Weise ist eine genaue Bestimmung des Partikelverlusts möglich, der alle relevanten Parameter berücksichtigt, die auch während dem Betrieb vorliegen.

In einer Ausführung wird der Partikelverlust für die oder jede charakteristische Partikelgröße bestimmt. Dadurch kann für verschiedene relevante Partikelgrößen ein Partikelverlust bestimmt werden, so dass im Betrieb eine genauere Korrektur der Messwerte erfolgen kann.

Insbesondere vorteilhaft ist es, wenn der Partikelverlust als Korrekturfaktor oder als Koeffizienten einer Korrekturfunktion abgebildet wird.

In einer Ausführung wird der Partikelverlust individuell für eine Messvorrichtung bestimmt, wodurch eine sehr genaue, auf die jeweilige Einsatzsituation angepasste Korrektur der Messwerte ermöglicht wird.

Der Partikelverlust kann auch als Transferfunktion für eine Klasse von Messvorrichtungen bestimmt werden. Dabei wird der Partikelverlust nur einmal bestimmt und für alle vergleichbaren oder typgleichen Messvorrichtungen verwendet. Dadurch entfällt die individuelle Bestimmung des Partikelverlusts, wodurch eine Einrichtung und Inbetriebnahme wesentlich einfacher ist und die Herstellung der Messvorrichtung einfacher und kostengünstiger ist.

In einer Ausführung der erfindungsgemäßen Messvorrichtung wird der charakteristische Partikelverlust beim Wechsel der Sonde manuell oder automatisch an eine Messvorrichtung, in der die Messvorrichtung verwendet wird, übermittelt. Auf diese Weise können bei einem Wechsel der Sonde die geänderten Partikelverluste automatisch berücksichtigt werden, ohne dass eine Eingabe oder Handlung eines Benutzers notwendig ist.

In einer Ausführung wird der Partikelverlust in einer Kalibrationsmessung bei der Herstellung einer Sonde ermittelt und in einem Speicherbereich der Sonde hinterlegt. Auf diese Weise kann eine Messvorrichtung den Partikelverlust beim Verbinden der Sonde oder jederzeit aus diesem Speicherbereich auslesen und zur Korrektur der Messwerte verwenden.

Die Erfindung umfasst auch eine Messvorrichtung mit einem Sensor zur Bestimmung einer Messgröße von Partikeln in einem Aerosol und einer Entnahmevorrichtung zur Entnahme einer Probe des Aerosols und zur Zuführung der Probe zum Sensor, gekennzeichnet durch Mittel
- zur Ermittlung einer charakteristischen Partikelgröße aus einem gemessenen geometrisch mittleren Partikeldurchmesser des Aerosols in einem zweiten Schritt,
- zum Auslesen eines charakteristischen Partikelverlusts der Sonde und der weiteren Systemkomponenten abhängig von der charakteristischen Partikelgröße aus einem Speicherbereich der Sonde in einem dritten Schritt,
- zur Erfassung eines Messwertes der Messgröße in einem vierten Schritt und
- zur Bestimmung eines Partikelverlusts aus dem Messwert der Messgröße und dem charakteristischen Partikelverlust und zur Korrektur des Messwertes mit dem Partikelverlust.

In einer Ausführung wird der charakteristische Partikelverlust beim Wechsel der Sonde manuell oder automatisch an die Messvorrichtung übermittelt. Auf diese Weise können verschiedene Sonden benutzt werden, und die Korrektur der Messwerte kann jeweils mit den genauen Partikelverlusten erfolgen.

In einer Ausführung ist der für die wechselbare Sonde charakteristische Partikelverlust zur automatischen Übermittlung an eine Messvorrichtung in einem Speicherbereich der Sonde hinterlegt. Der charakteristische Partikelverlust kann bei der Herstellung einmalig für den Sondentyp bestimmt werden und in dem Speicherbereich hinterlegt werden.

In einer Ausführung weist die Messvorrichtung ein Partikelmessgerät zur Ermittlung des geometrisch-mittleren Partikeldurchmesser des Aerosols als partikelverteilungsspezifische Information auf. Auf diese Weise kann der Partikelverlust in-situ bestimmt werden und spiegelt somit den Partikelverlust während der Messung wider. Dadurch ist die Fehlerkorrektur sehr genau.

Die Erfindung ist nachfolgend mit Bezug auf die beiliegenden Zeichnungen näher erläutert.

Es zeigt:
- Fig. 1: ein Ablaufdiagramm eines erfindungsgemäßen Verfahrens,
- Fig. 2: eine Blockdarstellung einer erfindungsgemäßen Messvorrichtung,
- Fig. 3: ein Diagramm eines ersten partikelgrößenabhängigen Partikelverlusts und
- Fig. 4: ein Diagramm eines zweiten partikelgrößenabhängigen Partikelverlusts.

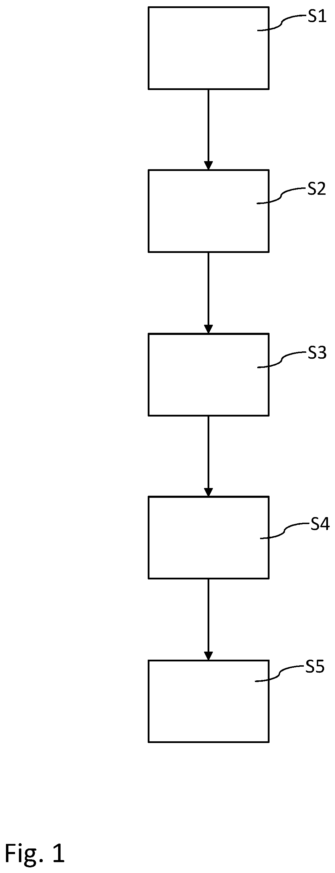

Die Fig. 1 zeigt ein Ablaufdiagramm eines erfindungsgemäßen Verfahrens zum Bestimmen einer Messgröße von Partikeln in einem Aerosol.

In einem ersten Schritt S1 wird eine Probe des Aerosols entnommen und einer Messvorrichtung zugeführt.

In einem zweiten Schritt S2 wird eine partikelverteilungsspezifische Information ermittelt. Diese partikelverteilungsspezifische Information kann wenigstens eine charakteristische Partikelgröße des Aerosols sein. Die charakteristische Partikelgröße kann aus dem geometrisch-mittleren Partikeldurchmesser des Aerosols oder einer anderen Partikelgrößen-Metrik bestimmt werden oder vorbekannt sein.

In einem darauffolgenden Schritt S3 wird aus der partikelverteilungsspezifischen Information ein Partikelverlust bestimmt. Der Partikelverlust kann aus einem einzelnen, die Partikelgrößenverteilung charakterisierenden Wert, beispielsweise dem geometrisch-mittleren Durchmesser, bestimmt oder auch durch eine vom Partikeldurchmesser abhängige Funktion beschrieben sein.

Schließlich wird ein Messwert S4 erfasst, und der Messwert mit dem Partikelverlust S5 korrigiert.

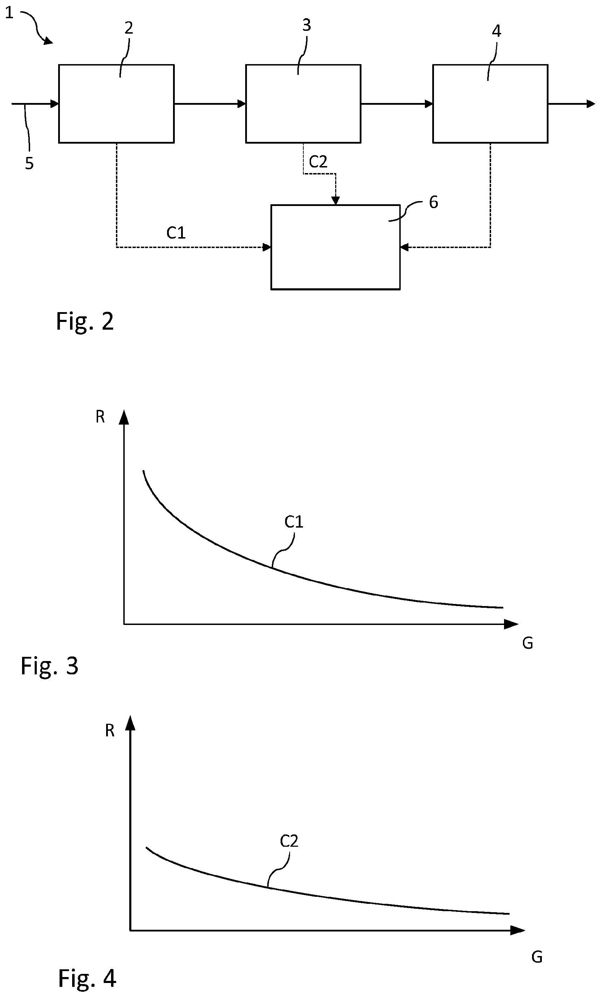

Die Fig. 2 zeigt schematisch eine Messvorrichtung 1 mit einer Sonde 2, weiteren Systemkomponenten 3 und einem Partikelmessgerät 4. Das Partikelmessgerät kann beispielsweise ein Diffusion Charging Sensor, DC-Sensor, sein. Das zu messende Aerosol 5 wird über die Sonde 2 in die Messvorrichtung 1 geführt und dem Partikelmessgerät 4 zugeführt. Dazwischen können weitere Systemkomponenten 3 liegen, durch die das Aerosol 5 hindurchgeführt wird. Diese können beispielsweise eine Kühlung für heiße Abgase und/oder andere zur Aufbereitung des Aerosols notwendigen Komponenten sein.

Die Messvorrichtung 1 weist im Beispiel einen Prozessor 6 auf, der zur Durchführung eines erfindungsgemäßen Verfahrens, beispielsweise nach Fig. 1, ausgebildet ist.

Die Sonde 2 ist im Beispiel als wechselbare Sonde ausgebildet, die einen Speicherbereich aufweist, in dem der charakteristische Partikelverlust der Sonde 2 gespeichert ist. Dieser wird beim Verbinden der Sonde 2 an den Prozessor 6 übermittelt. Die Schritte S2 und S3 erfordern daher lediglich das Abrufen dieses übermittelten Wertes.

Der Prozessor 6 ist weiterhin zur Erfassung des Messwertes mit dem Sensor 4 verbunden. Die Messwerte können im Prozessor 6 mit den Partikelverlusten korrigiert werden.

Die Fig. 3 zeigt beispielhaft den charakteristischen Partikelverlust C1 der Sonde 2 als Funktion des Partikelverlusts R in Abhängigkeit zur Partikelgröße G.

Die Fig. 4 zeigt beispielhaft den charakteristischen Partikelverlust C2 der Systemkomponenten 3 als Funktion des Partikelverlusts R in Abhängigkeit zur Partikelgröße G. Im Beispiel verläuft die Kurve C2 hier flacher als die Kurve C1.

Der Prozessor 6 berechnet nun aus diesen beiden charakteristischen Partikelverlusten einen Korrekturwert, mit dem die Messwerte korrigiert werden.

### Bezugszeichenliste

- 1: Messvorrichtung
- 2: Sonde
- 3: Systemkomponenten
- 4: Partikelmessgerät
- 5: Aerosol
- 6: Prozessor
- C1: charakteristischer Partikelverlust der Sonde
- C2: charakteristischer Partikelverlust der Systemkomponenten
- S1 - S5: Prozessschritte

## Patentansprüche

1. Verfahren zum Bestimmen einer Messgröße von Partikeln in einem Aerosol (5), bei dem in einem ersten Schritt (S1) zumindest eine Probe des Aerosols (5) durch eine wechselbare Sonde (2) und weitere Systemkomponenten (3) und in einen Sensor (4) einer Messvorrichtung (1) zugeführt wird,
wobei
- in einem zweiten Schritt (S2) eine charakteristische Partikelgröße (G) aus einem gemessenen geometrisch-mittleren Partikeldurchmesser des Aerosols (5) ermittelt wird;
- in einem dritten Schritt (S3) ein charakteristischer Partikelverlust (C1) der Sonde (2) und der Systemkomponenten (3) abhängig von der charakteristischen Partikelgröße (G) aus einem Speicherbereich der Sonde (2) ausgelesen wird;
- in einem vierten Schritt (S4) ein Messwert der Messgröße erfasst wird; und
- in einem fünften Schritt (S5) ein Partikelverlust aus dem Messwert der Messgröße und dem charakteristischen Partikelverlust (C1) bestimmt und der Messwert der Messgröße mit dem Partikelverlust korrigiert wird.

2. Verfahren nach Anspruch 1, **dadurch gekennzeichnet, dass** der geometrisch-mittlere Partikeldurchmesser des Aerosols durch ein Partikelmessgerät gemessen wird.

3. Messvorrichtung (1) mit einem Sensor (4) zur Bestimmung einer Messgröße von Partikeln in einem Aerosol (5), einer wechselbaren Sonde (2), weiteren Systemkomponenten (3) und einer Entnahmevorrichtung zur Entnahme einer Probe des Aerosols (5) und zur Zuführung der Probe des Aerosols (5) in einem ersten Schritt (S1) durch die Sonde (2) und die Systemkomponenten (3) und in den Sensor (4), einem Mittel (6)
- zur Ermittlung einer charakteristischen Partikelgröße (G) aus einem gemessenen geometrisch mittleren Partikeldurchmesser des Aerosols in einem zweiten Schritt (S2),
- zum Auslesen eines charakteristischen Partikelverlusts (C1) der Sonde (2) und der weiteren Systemkomponenten (3) abhängig von der charakteristischen Partikelgröße (G) aus einem Speicherbereich der Sonde (2) in einem dritten Schritt (S3),
- zur Erfassung eines Messwertes der Messgröße in einem vierten Schritt (S4) und
- zur Bestimmung eines Partikelverlusts aus dem Messwert der Messgröße und dem charakteristischen Partikelverlust (C1) und zur Korrektur des Messwertes mit dem Partikelverlust.

4. Messvorrichtung (1) nach Anspruch 3, **dadurch**
**gekennzeichnet, dass** der charakteristische Partikelverlust (C1) beim Wechsel der Sonde (2) manuell oder automatisch an die Messvorrichtung (1) übermittelt wird.

5. Messvorrichtung (1) nach Anspruch 4, **dadurch**
**gekennzeichnet, dass** der charakteristische Partikelverlust (C1) zur automatischen Übermittlung in dem Speicherbereich der Sonde (2) hinterlegt ist.

## Claims

1. Method for determining a measurement variable of particles in an aerosol (5), wherein in a first step (S1) at least one sample of the aerosol (5) is fed to a measuring device of a measuring apparatus through a changeable probe (2), through further system components (3), and into a sensor (4), ***characterized in that***
• in a second step (S2), a characteristic particle size (G) is determined from a mean geometric particle diameter of the aerosol (5);
• in a third step (S3), a characteristic particle loss of the probe (2) and of the system components (3) dependent on the characteristic particle size (G) is read from a memory of the probe (2);
• in a fourth step (S4), a value of the measurement variable is measured; and
• in a fifth step (S5), a particle loss is determined from the value and the characteristic particle loss of the probe (2), and the value is corrected with the particle loss.

2. Method according to claim *1, **characterized in that*** the mean geometric particle diameter of the aerosol is measured by a particle measuring apparatus.

3. Measuring apparatus (1) comprising a sensor (4) configured to determine a measurement variable of particles in an aerosol (5) and a capture device configured to capture a sample of the aerosol and in a first step (S1) to feed the sample through a changeable probe (2), through further system components (3), and into the sensor (4), ***characterized by*** means configured
• in a second step (S2), to determine a characteristic particle size (G) from a mean geometric particle diameter of the aerosol (5);
• in a third step (S3), to read a characteristic particle loss of the probe (2) and of the system components (3) dependent on the characteristic particle size (G) from a memory of the probe (2);
• in a fourth step (S4), to measure a value of the measurement variable; and
• in a fifth step (S5), to determine a particle loss from the value and the characteristic particle loss of the probe (2), and to correct the value with the particle loss.

4. Measuring apparatus (1) according to claim 3, ***characterized in that*** the characteristic particle loss (C1) is manually or automatically transmitted to the measuring apparatus (1) when the probe (2) is changed.

5. Measuring apparatus according to claim 4, ***characterized in that*** the characteristic particle loss (C1) of the changeable probe (2) is stored for automatic transmission in a memory of the probe (2).

## Revendications

1. Procédé permettant de déterminer un paramètre de particules dans un aérosol (5), consistant à faire passer, dans une première étape (S1), au moins un échantillon de l'aérosol (5) à travers une sonde (2) échangeable et d'autres constituants de système (3) et dans un capteur (4) d'un dispositif de mesure (1), dans lequel
- dans une deuxième étape (S2), on détermine à partir de la moyenne géométrique des diamètres de particule mesurés de l'aérosol (5), une taille de particules (G) caractéristique ;
- dans une troisième étape (S3), on procède à la lecture, à partir d'une zone de stockage de la sonde (2), d'une perte de particules (C1) caractéristique telle qu'elle se produit au niveau de la sonde (2) et des constituants de système (3) en fonction de la taille de particules (G) caractéristique ;
- dans une quatrième étape (S4), on détecte une valeur mesurée dudit paramètre ; et
- dans une cinquième étape (S5), on détermine à partir de la valeur mesurée du paramètre et de la perte de particules (C1) caractéristique, une perte de particules et on corrige la valeur mesurée du paramètre à l'aide de cette perte de particules.

2. Procédé selon la revendication 1, **caractérisé en ce que** la mesure de la moyenne géométrique des diamètres de particule de l'aérosol est réalisée au moyen d'un appareil de mesure de particules.

3. Dispositif de mesure (1) comportant un capteur (4) destiné à déterminer un paramètre de particules dans un aérosol (5), une sonde échangeable (2), d'autres constituants de système (3) et un dispositif de prélèvement permettant de prélever un échantillon de l'aérosol (5) et de faire passer, dans une première étape (S1), l'échantillon de l'aérosol (5) à travers la sonde (2) et les constituants de système (3) et dans le capteur (4), un moyen (6) destiné à
- déterminer, dans une deuxième étape (S2), à partir d'une moyenne géométrique des diamètres de particule mesurés de l'aérosol une taille de particules (G) caractéristique,
- procéder à la lecture, dans une troisième étape (S3), à partir d'une zone de stockage de la sonde (2), d'une perte de particules (C1) caractéristique telle qu'elle se produit au niveau de la sonde (2) et des constituants de système (3) en fonction de la taille de particules (G) caractéristique,
- détecter, dans une quatrième étape (S4), une valeur mesurée dudit paramètre,
- déterminer, à partir de la valeur mesurée du paramètre et de la perte de particules (C1) caractéristique, une parte de particules et corriger la valeur mesurée à l'aide de cette perte de particules.

4. Dispositif de mesure (1) selon la revendication 3, **caractérisé en ce que**, lors de l'échange de la sonde (2), la perte de particules (C1) caractéristique est transmise au dispositif de mesure (1) de manière manuelle ou automatique.

5. Dispositif de mesure (1) selon la revendication 4, **caractérisé en ce que** la parte de particules (C1) caractéristique est enregistrée dans la zone de stockage de la sonde (2) afin d'être automatiquement transmise.
